(19) Europäisches Patentamt / European Patent Office / Office européen des brevets

(11) **EP 3 319 797 B1**

(12) **EUROPEAN PATENT SPECIFICATION**

(45) Date of publication and mention
of the grant of the patent:
**08.09.2021 Bulletin 2021/36**

(51) Int Cl.:
*B32B 27/08* (2006.01)     *B32B 27/18* (2006.01)
*B32B 27/24* (2006.01)     *B32B 27/36* (2006.01)
*B32B 27/06* (2006.01)

(21) Application number: **16747725.6**

(22) Date of filing: **05.07.2016**

(86) International application number:
**PCT/EP2016/001145**

(87) International publication number:
**WO 2017/005360 (12.01.2017 Gazette 2017/02)**

(54) **MULTILAYER POLYMER FILM AND MULTIPACK MADE THEREOF**

MEHRSCHICHTIGE POLYMERFOLIE UND DARAUS HERGESTELLTE MULTIPACKUNG

FILM POLYMÈRE MULTICOUCHE ET EMBALLAGE MULTIPLE FABRIQUÉ À PARTIR DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2015 DE 102015008554**

(43) Date of publication of application:
**16.05.2018 Bulletin 2018/20**

(73) Proprietor: **Klöckner Pentaplast GmbH
56412 Heiligenroth (DE)**

(72) Inventors:
• **GARRIGA, Jordi
08470 Sant Celoni (BCN) (ES)**
• **QUILLAY, Nicolas
56440 Languidic (FR)**

• **IBAÑEZ, Carles
08221 Terrassa (BCN) (ES)**

(74) Representative: **Plate, Jürgen
Plate Schweitzer Zounek
Patentanwälte
Rheingaustrasse 196
65203 Wiesbaden (DE)**

(56) References cited:
**WO-A1-2011/119639     WO-A1-2014/067923
DE-A1-102005 058 916**

• **DATABASE WPI Week 201182 Thomson
Scientific, London, GB; AN 2011-P09826
XP002762523, & CN 102 211 424 A (WUHAN
KINGBULL ECONOMIC DEV CO LTD) 12 October
2011 (2011-10-12)**

**Description**

The present invention pertains to a multilayer polymer film with 3 to 10 layers and to a multipack comprising 2 to 40 containers, which is thermoformed from the multilayer polymer film.

Multipacks for food produce, such as yoghurt, pudding, jam or butter are known in the art. Customary multipacks comprising 2 to 40 packs, respectively containers or cups are thermoformed from white or colored single-layer polystyrene film having a thickness of 400 to 1200 $\mu$m. Typically, the containers of a multipack are arranged in a pattern of periodic rows and columns connected by planar strips of polystyrene film. The respective food produce may be filled into the containers of a multipack immediately after thermoforming (inline) or after intermediate storage of empty multipacks (offline). Subsequently, the multipack, respectively the containers holding the food produce are sealed with a lid film. Thereafter, the lid film and the surface of contiguous multipack strips extending between adjacent container rows and columns are incised to a preset depth using a cutting wheel or similar means in order to facilitate manual separation of individual containers by end consumers. In the art as well as in the present invention said incisions are also termed as "snap incisions".

A polymer film suitable for the manufacture of multipacks must be thermoformable and sealable and provide adequate mechanical stability and diffusion barrier in order to prevent mechanical damage and preserve the food produce contained therein over an extended time period. Furthermore, the film material must not release harmful substances when directly contacting food produce over an extended time period.

Customary multipacks are manufactured from homogeneous single-layer film on the basis of polystyrene. Polystyrene provides suitable thermal and mechanical properties at a favorable density of 0.96 to 1.04 g/cm$^3$. However, polystyrene is known to have a low diffusion barrier for oxygen and water vapor, which in many instances can adversely affect food produce stored in polystyrene containers over an extended time period.

Furthermore, polystyrene contains up to 1 % by weight of the lipid-soluble monomer styrene which migrates into food produce and can adversely affect human health (cf. J.R. Withey "Quantitative Analysis of Styrene Monomer in Polystyrene and Foods Including Some Preliminary Studies of the Uptake and Pharmacodynamics of the Monomer in Rats" Environmental Health Perspectives, Vol. 17, pp. 125-133, 1976).

WO 2014/067923 A1 discloses an article being a bottle or a thermoformed cup, preferably in a multipack form or in an individual cup form, comprising at least one layer A of a non-foamed polylactic acid material A comprising polylactic acid, and one layer B of a foamed polylactic acid material B comprising polylactic acid and being substantially free of expanded microspheres, wherein material A and/or material B comprise an impact modifier. In addition to the impact modifiers in an amount 0.01 to 30% by weight, further additives such as talc particles or titanium dioxide pigments, may be present in an amount of 0.1 to 15% by weight in material A and/or B, respectively as nucleating agent or pigment. ABA structures are also disclosed therein.

Thus, there exists a need for a polymer film that does not pose a health risk, is suitable for multipacks and provides improved shelf life for food produce.

Accordingly, the present invention has the objective to provide a thermoformable film for the manufacture of multipacks with improved diffusion barrier for oxygen and water vapour compared to conventional multipacks made from polystyrene in conjunction with suitable mechanical properties. In particular the inventive film, when thermoformed, should be resistant against bending and kinking under mechanical load as occurring during storage and transport of multipacks filled with food produce, such as yoghurt. Furthermore, the inventive multipack should provide easy separation of individual packs, respectively containers when equipped with snap incisions. This objective is achieved through a multilayer polymer film with 3 to 10 layers, wherein

- a first layer consists of 80 to 99.5 % by weight of polyester and 0.5 to 20 % by weight of additives, based on the total weight of the first layer and comprises pores;
- a second layer is bonded to a first surface of the first layer and consists of 50 to 90 % by weight of polyester and 10 to 50 % by weight of additives, wherein 1 to 30 % by weight of a first additive is selected from chalc, talc, mica, wollastonite, calcium carbonate, bentonite, kaolin, clay, titanium oxide and mixtures thereof, based on the total weight of the second layer;
- the polyester of the first and second layer independently from each other are selected from polyethylene terephthalate and polyesters which consist of (i) 80 to 100 mol-% of a diacid residue component selected from terephthalic acid, naphthalene dicarboxylic acid, 1,4-cyclohexanedicarboxylic acid, isophthalic acid and mixtures thereof and (ii) 80 to 100 mol-% of a diol residue component selected from diols containing 2 to 10 carbon atoms, in particular ethylene glycol, and mixtures thereof and 0 to 20 mol-% of a modifying diol selected from 1,3-propanediol, 1,4-butanediol, 1,5-pentanediol, 1,6-hexanediol, 1,8-octanediol, 1,4-cyclohexanedimethanol, 2,2,4-trimethyl-1,3-pentanediol, propylene glycol, 2,2,4,4-tetramethyl-1,3-cyclobutanediol, based on 100 mol-% diacid residues and, respectively 100 mol-% diol residues;
- the multilayer polymer film comprises a third layer bonded to a second surface of the first layer opposite to the second layer, the third layer consisting of 90 to 99.5 % by weight of polyester and 0.5 to 10 % by weight of additives, based on the total weight of the third layer and the third layer does not comprise a foaming agent and anorganic particles.

Advantageous implementations of the inventive film are characterized in that:

- the multilayer polymer film has an oxygen permeability (oxygen transmission rate OTR) of 1 to 40 cm$^3$ / (m$^2$·day·atm), measured according to DIN 53380-3;

- the multilayer polymer film has a water vapor permeability (water vapor transmission rate WVTR) of 1 to 6 g / (m$^2$·day), measured according to DIN EN ISO 15106-2;

- the multilayer polymer film has an oxygen transmission rate of 1 to 10 cm$^3$ / (m$^2$·day·atm), 1 to 5 cm$^3$ / (m$^2$·day·atm), 3 to 7 cm$^3$ / (m$^2$·day·atm) or 6 to 10 cm$^3$ / (m$^2$·day·atm), measured according to DIN 53380-3;

- the multilayer polymer film has a water vapor permeability (water vapor transmission rate WVTR) of 1 to 3 g / (m$^2$·day), 1 to 2 g / (m$^2$·day) or 2 to 3 g / (m$^2$·day), measured according to DIN EN ISO 15106-2;

- the multilayer polymer film has a bending stiffness of 60 to 200 N·mm$^2$ per 1 mm film width, measured according to DIN 53350;

- the multilayer polymer film has a bending stiffness of 50 to 120 N·mm$^2$ per 1 mm film width, measured according to DIN 53350 at film thickness of 700 μm;

- the multilayer polymer film has a bending stiffness of 50 to 70 N·mm$^2$ , 60 to 80 N·mm$^2$ , 70 to 90 N·mm$^2$ , 80 to 100 N·mm$^2$ , 90 to 110 N·mm$^2$ or 100 to 120 N·mm$^2$ per 1 mm film width, measured according to DIN 53350 at film thickness of 700 μm;

- the multilayer polymer film has a bending stiffness of 146·t$^3$ to 350·t$^3$ N/mm per 1 mm film width, wherein t is the thickness of the multilayer polymer film in units of mm and the bending stiffness is measured according to DIN 53350;

- the multilayer polymer film has a bending stiffness of 146·t$^3$ to 204·t$^3$ N/mm, 175·t$^3$ to 233·t$^3$ N/mm, 204·t$^3$ to 262·t$^3$ N/mm, 233·t$^3$ to 292·t$^3$ N/mm, 262·t$^3$ to 321 ·t$^3$ N/mm or 292·t$^3$ to 350·t$^3$ N/mm per 1 mm film width, wherein t is the thickness of the multilayer polymer film in units of mm and the bending stiffness is measured according to DIN 53350;

- the multilayer polymer film has a density of 1 to 1.4 g/cm$^3$ ;

- the multilayer polymer film has a density of 1 to 1.2 g/cm$^3$ , 1.1 to 1.3 g/cm$^3$ or 1.2 to 1.4 g/cm$^3$ ;

- the multilayer polymer film is made by coextrusion, wherein multiple melt streams are overlayed and extruded through a coextrusion slit die;

- the first layer is formed by extrusion or coextrusion of a plastified mold composition containing a pressurized gas and pores in the first layer are generated through expansion of the pressurized gas;

- the first layer is formed by extrusion or coextrusion of a plastified mold composition containing a foaming agent and pores in the first layer are generated through expansion of a gas created by volatilization of the foaming agent;

- the first layer consists of 80 to 99.5 % by weight of polyester and 0.5 to 20 % by weight of additives, based on the total weight of the first layer, comprises pores and the additives are selected from processing aids, heat stabilizers, lubricants, waxes, fats, paraffins, epoxidized soya oil, polymeric modifiers, acrylate-based polymers, butyl-methacrylate-based polymers, methacrylate-butyl-styrene-based polymers, methacrylate-butadiene-styrene-based polymers, methylmethacrylate-butadiene-styrene-based polymers, dyes and pigments, fungicides, UV stabilizers, fire-protection agents and fragrances;

- the multilayer polymer film is not stretched;

- the multilayer polymer film is stretched in a first direction or in a first and second direction at a stretch ratio of 1.01 to 1.5 in the first and/or second direction independently from each other;

- the first layer is not stretched;

- the first layer is stretched in a first direction or in a first and second direction at a stretch ratio of 1.01 to 1.5 in the first and/or second direction independently from each other;

- the first layer consists of 80 to 99.5 % by weight of polyester and 0.5 to 20 % by weight of additives, based on the total weight of the first layer, comprises pores and has an elastic modulus of 700 to 2000 N/mm$^2$, when prepared as single-layer film under the same conditions as the multilayer polymer film;

- the second layer is bonded to a first surface of the first layer and consists of 50 to 90 % by weight of polyester and 10 to 50 % by weight of additives, wherein 1 to 30 % by weight of a first additive is selected from chalc, talc, mica, wollastonite, calcium carbonate, bentonite, kaolin, clay, titanium oxide and mixtures thereof, based on the total weight of the second layer and further additives are selected from processing aids, heat stabilizers, lubricants, waxes, fats, paraffins, epoxidized soya oil, polymeric modifiers, acrylate-based polymers, butyl-methacrylate-based polymers, methacrylate-butyl-styrene-based polymers, methacrylate-butadiene-styrene-based polymers, methylmethacrylate-butadiene-styrene-based polymers, dyes and pigments, fungicides, UV stabilizers, fire-protection agents and fragrances;

- the second layer is bonded to a first surface of the first layer and consists of 50 to 90 % by weight of polyester and 10 to 50 % by weight of additives, wherein 1 to 30 % by weight of a first additive is selected from chalc, talc, mica, wollastonite, calcium carbonate, bentonite, kaolin, clay, titanium oxide and mixtures thereof, based on the total weight of the second layer and has an elastic modulus of 1800 to 3200 N/mm$^2$, when prepared as single-layer film under the same conditions as the multilayer polymer film;

- the first layer has an elastic modulus of 700 to 1000 N/mm$^2$, 800 to 1200 N/mm$^2$, 1000 to 1400 N/mm$^2$, 1200 to 1600 N/mm$^2$, 1400 to 1800 N/mm$^2$ or 1600 to 2000 N/mm$^2$, when prepared as single-layer film under the same conditions as the multilayer polymer film;

- the second layer has an elastic modulus of 1800 to 2200 N/mm$^2$, 2000 to 2400 N/mm$^2$, 2200 to 2600 N/mm$^2$, 2400 to 2800 N/mm$^2$, 2600 to 3000 N/mm$^2$ or 2800 to 3200 N/mm$^2$, when prepared as single-layer film under the same conditions as the multilayer polymer film;

- the multilayer polymer film has a thickness of 400 to 1200 $\mu$m;

- the multilayer polymer film has a thickness of 400 to 800 $\mu$m, 600 to 1000 $\mu$m or 800 to 1200 $\mu$m;

- the ratio of thickness T1 of the first layer to thickness T2 of the second layer is in the range from 0.5 to 4, i.e. $0.5 \leq T1 / T2 \leq 4$;

- the ratio of thickness T1 of the first layer to thickness T2 of the second layer is in the range from 0.5 to 2, i.e. $0.5 \leq T1 / T2 \leq 2$;

- the ratio of thickness T1 of the first layer to thickness T2 of the second layer is in the range from 1 to 2, i.e. $1 \leq T1 / T2 \leq 2$;

- the ratio of thickness T1 of the first layer to thickness T2 of the second layer is in the range from 1.5 to 2.5, i.e. $1.5 \leq T1 / T2 \leq 2.5$;

- the ratio of thickness T1 of the first layer to thickness T2 of the second layer is in the range from 2 to 3, i.e. $2 \leq T1 / T2 \leq 3$;

- the ratio of thickness T1 of the first layer to thickness T2 of the second layer is in the range from 2.5 to 3.5, i.e. $2.5 \leq T1 / T2 \leq 3.5$;

- the ratio of thickness T1 of the first layer to thickness T2 of the second layer is in the range from 3 to 4, i.e. $3 \leq T1 / T2 \leq 4$;

- the ratio of thickness T1 of the first layer to thickness T2 of the second layer is in the range from 0.5 to 0.9, i.e. $0.5 \leq T1 / T2 \leq 0.9$;

- the first layer comprises pores and has a density of 0.8 to 1.1 g/cm$^3$, when prepared as single-layer film under the same conditions as the multilayer polymer film;

- the first layer comprises pores and has a density of 0.8 to 1 g/cm$^3$ or 0.9 to 1.1 g/cm$^3$, when prepared as single-layer film under the same conditions as the multilayer polymer film;

- the second layer has a density of 1.3 to 1.5 g/cm$^3$, when prepared as single-layer film under the same conditions as the multilayer polymer film;

- the second layer has a density of 1.3 to 1.4 g/cm$^3$ or 1.4 to 1.5 g/cm$^3$, when prepared as single-layer film under the same conditions as the multilayer polymer film;

- the first layer comprises 8 to 19.9 % by weight of polyethylene and 0.1 to 2 % by weight of ethylene vinyl acetate, based on the total weight of the first layer;

- the second layer comprises 8 to 24 % by weight of polyethylene and 0.1 to 2 % by weight of ethylene vinyl acetate, based on the total weight of the second layer;

- the first layer comprises 0.01 to 1 % by weight of a foaming agent, based on the total weight of the first layer;

- the foaming agent is selected from carbon dioxide, sodium hydrogen carbonate and citric acid, nitrogen, azodicarbonamide, oxy-bis-benzene sulfonylhydrazide, toluene sulfonylhydrazide, benzene sulfonylhydrazide, toluene sulfonylsemicarbazide, 5-phenyltetrazole, di-nitroso pentamethylene tetramine and mixtures thereof;

- the second layer comprises 1 to 30 % by weight of an additive selected from chalc, talc, mica, wollastonite, calcium carbonate, bentonite, kaolin, clay, titanium oxide and mixtures thereof, based on the total weight of the second layer, said additive consisting of particles having a particle size of less than 60 $\mu$m, from 0.01 to 50 $\mu$m, 0.01 to 40 $\mu$m, 0.01 to 30 $\mu$m or 1 to 50 $\mu$m;

- the second layer comprises 1 to 8 % by weight, 6 to 10 % by weight, 8 to 12 % by weight, 10 to 14 % by weight, 12 to 16 % by weight, 14 to 18 % by weight, 16 to 20 % by weight, 18 to 22 % by weight, 20 to 24 % by weight, 22 to 26 % by weight, 24 to 28 % by weight or 26 to 30 % by weight of an additive selected from chalc, talc, mica, wollastonite, calcium carbonate, bentonite, kaolin, clay, titanium oxide and mixtures thereof, based on the total weight of the second layer;

- the multilayer polymer film consists of 3 layers;

- the multilayer polymer film consists of 4 layers;

- the multilayer polymer film comprises a fourth layer bonded to a surface of the second layer opposite to the first layer, the fourth layer comprising 90 to 99.5 % by weight of polyester and 0.5 to 10 % by weight of additives, based on the total weight of the fourth layer;

- the multilayer polymer film comprises a fourth layer bonded to a surface of the second layer opposite to the first layer, the fourth layer comprising 90 to 99.5 % by weight of polyester and 0.5 to 10 % by weight of additives, based on the total weight of the fourth layer, and the fourth layer does not comprise a foaming agent;

- the multilayer polymer film comprises a fourth layer bonded to a surface of the second layer opposite to the first layer, the fourth layer comprising 90 to 99.5 % by weight of polyester and 0.5 to 10 % by weight of additives, based on the total weight of the fourth layer, and the fourth layer does not comprise anorganic particles;

- the one or more polyesters of the third and fourth layer independently from each other are selected from polyethylene terephthalate and polyesters which consist of (i) 80 to 100 mol-% of a diacid residue component selected from terephthalic acid, naphthalene dicarboxylic acid, 1,4-cyclohexanedicarboxylic acid, isophthalic acid and mixtures thereof and (ii) 80 to 100 mol-% of a diol residue component selected from diols containing 2 to 10 carbon atoms, in particular ethylene glycol, and mixtures thereof and 0 to 20 mol-% of a modifying diol selected from 1,3-propanediol, 1,4-butanediol, 1,5-pentanediol, 1,6-hexanediol, 1,8-octanediol, 1,4-cyclohexanedimethanol, 2,2,4-trimethyl-1,3-pentanediol, propylene glycol, 2,2,4,4-tetramethyl-1,3-cyclobutanediol, based on 100 mol-% diacid residues and, respectively 100 mol-% diol residues;

- the third layer has a thickness of 4 to 60 $\mu$m;

- the third layer has a thickness of 4 to 20 $\mu$m, 10 to 30 $\mu$m, 20 to 40 $\mu$m, 30 to 50 $\mu$m or 40 to 60 $\mu$m; and/or

- the fourth layer has a thickness of 4 to 60 $\mu$m.

Throughout the present invention - unless explicitly stated otherwise - the term "% by weight" refers to the total weight of the film layer under consideration, e.g. to the total weight of the first, second, third or fourth layer of the inventive multilayer polymer film, wherein the total weight of the film layer under consideration represents 100 % by weight. The amount of a component in one of the film layers in units of "% by weight" corresponds to the amount of this component in the molding composition used for extrusion of the film layer, relative to the total weight of the molding composition.

Furthermore, the present invention has the objective to provide a multipack having improved diffusion barrier for oxygen and adequate diffusion barrier for water vapour compared to conventional multipacks made from polystyrene in conjunction with suitable mechanical properties. In particular the multipack should be resistant against bending and kinking under mechanical loads occurring for example, when twenty or more multipacks filled with food produce, such as jam or yoghurt are stacked upon each other. Furthermore, the inventive multipack should provide easy separation of individual packs, respectively containers when equipped with suitable incisions.

This objective is achieved through a multipack comprising 2 to 40 containers, wherein the multipack is thermoformed from the inventive multilayer film as described above and wherein the first layer or the third layer of the multilayer polymer film constitute an upper surface of the multipack having concave portions.

An advantageous implementation of the inventive multipack is characterized in that the multipack comprises 1 to 40 snap incisions extending from the upper surface of the multipack into the multilayer polymer film to a depth D, wherein $D1 \leq D \leq D2$, D1 extends to 80 % of the thickness of the first layer and D2 extends to 50 % of the thickness of the second layer.

The snap incisions may be applied after the thermoformed multipack has been filled with produce and sealed with a lid film. Thus, the multipack of the present invention may also comprise a lid film sealed onto contiguous planar strips of the multipack extending between adjacent container rows and columns. Preferably, said lid film consists of a sealable single-layer or multilayer polymer film equipped with a metal coating and one or more print layers.

The inventive multilayer polymer film is prepared by known methods, such as coextrusion or calendering in conjunction with lamination. Similarly, the inventive multipack is manufactured using conventional thermoforming equipment and process parameters commensurate to those for multipacks made from polystyrene film.

The inventive multilayer polymer film may consist of two or three layers, i.e. the first and second layer plus optionally either the third or fourth layer.

Each of the layers of the inventive multilayer polymer film provides distinct functionality as explained hereafter.

The first layer is porous, has reduced density compared to regular polyethylene terephthalate and thus lowers the overall density and weight of the multilayer polymer film. Coincidentally, the first layer has a somewhat reduced elastic modulus and higher elongation at break which renders the multilayer polymer film more flexible and resistant against bending and tensile load. Also, due to its porosity the first layer can be easily cut and facilitates placement of snap incisions.

The second layer, which preferably contains a particulate inorganic additive, has a high elastic modulus compared to regular polyethylene terephthalate and imparts bending stiffness to the multilayer polymer film. In addition the second layer is brittle and furthers "snappability" of multipacks thermoformed from the inventive multilayer polymer film. The term "snappability" refers to the suitability of a multipack for manually induced breakage along designated snap incisions.

By adjusting the thickness and mechanical properties, particularly the elastic modulus of the first and second layer the bending stiffness and - in conjunction with snap incision depth - the snappability of the multilayer polymer film can be tuned to the application specific requirements for a multipack. Furthermore, the thickness of the first and second layer can also be adjusted in order to adapt the thickness of the multilayer polymer film to the specific requirement of a multipack thermoforming operation.

In an advantageous embodiment of the inventive multilayer polymer film the first and/or second layer comprises a polyolefin or a polyamide, preferably in conjunction with a compatibilizer such as ethylene vinyl acetate in order to increase the barrier against diffusion of oxygen and water vapor. The polyolefin or polyamide forms domains in the polyester matrix of the first and/or second layer and reduces the diffusivity of $O_2$- and $H_2O$-molecules.

The third layer provides a smooth nonporous surface finish and insulates food produce contained in a multipack from the first layer of the inventive multilayer polymer film. In addition the third layer increases the bending stiffness of the multilayer polymer film.

The optional fourth layer enhances the visual appearance of multipacks thermoformed from the inventive multilayer polymer film. Preferably, the outer surface of the fourth layer opposite to the second layer has a glossy surface finish. In addition the fourth layer may comprise color additives which preferably are compliant with the requirements for food packaging.

BRIEF DESCRIPTION OF THE DRAWINGS

Fig. 1-3     are schematics of multilayer films of the present invention;
Fig. 4       shows a perspective view of a multipack made from the inventive film;
Fig. 5-8     show details of snap incisions in the multipack of the present invention;
Fig. 9       shows the geometry of the setup for measuring the bending stiffness of the inventive film.

DETAILED DESCRIPTION

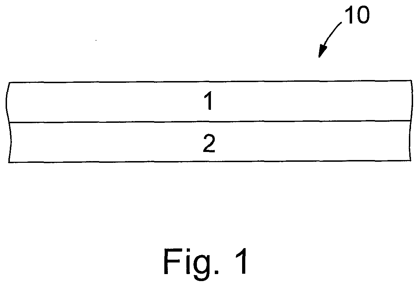

Fig. 1 shows a multilayer polymer film 10 not according to the present invention comprising a first layer 1 and a second layer 2.

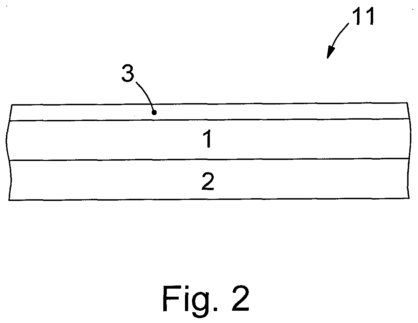

Fig. 2 shows a multilayer polymer film 11 according to the present invention comprising a first layer 1, a second layer 2 and a third layer 3.

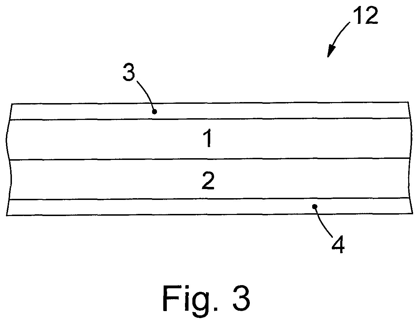

Fig. 3 shows a multilayer polymer film 13 according to the present invention comprising a first layer 1, a second layer 2, a third layer 3 and a fourth layer 4.

The inventive multilayer polymer film may consist of three layers, i.e. the first and second layer plus the third layer. In particular the multilayer polymer film may consist of layers 1, 2 and 3 or layers 1, 2, 3 and 4.

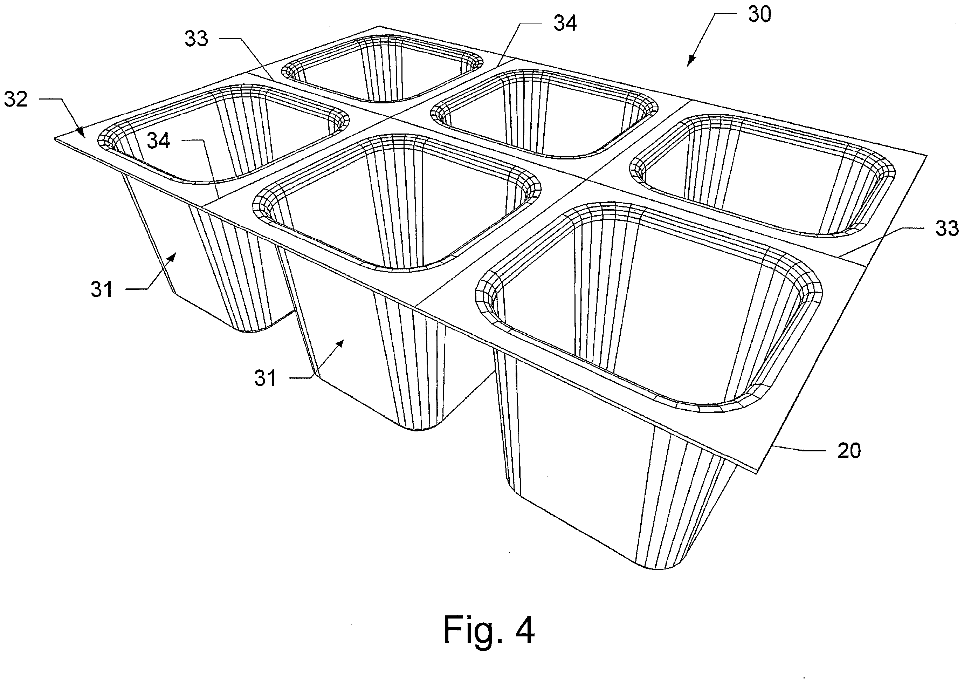

Fig. 4 shows a perspective view of an exemplary multipack 30 thermoformed from the multilayer polymer film of the present invention. The multipack 30 comprises six containers 31. Preferably, containers 31 are arranged in a periodic pattern of parallel rows and columns. An upper surface 32 of the multipack 30 comprises concave portions, the shape of which corresponds to the shape of containers 31. Preferably, the upper surface 32 is formed by the first layer or the third layer of the multilayer polymer film of the present invention. The upper surface 32 of multipack 30 further comprises incisions 33 and 34. Preferably, incisions 33 and 34 are located symmetrically halfway between adjacent rows and columns of containers 31.

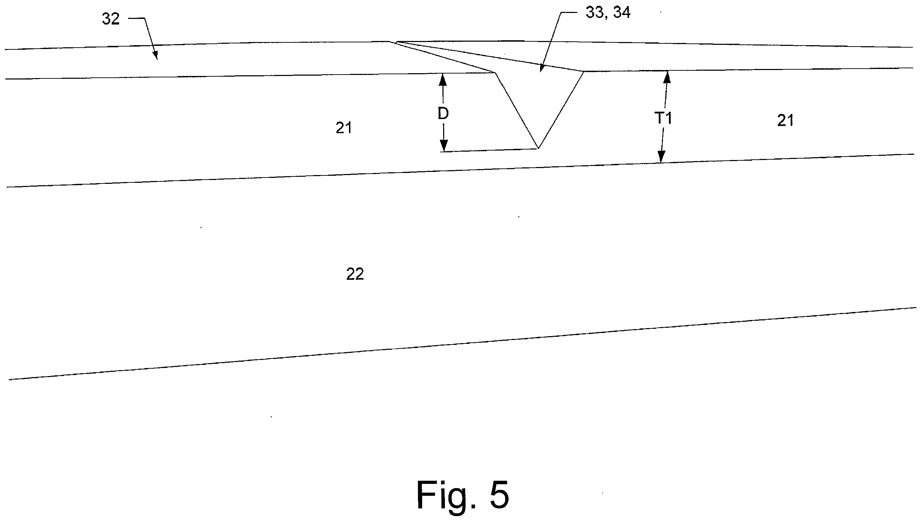

Fig. 5 schematically shows details of incisions 33 and 34 in the upper surface 32 of a multipack thermoformed from a film according to the present invention, wherein said film comprises a first layer 21 and a second layer 22, corresponding to layer 1 and, respectively layer 2 of Fig. 1. In

Fig. 5 the thickness of the first layer 21 is designated by reference sign "T1". Incisions 33 and 34 extend from the upper surface 32 into the first layer 21 down to depth D. Preferably, depth D is equal or larger than 60 % of T1, i.e. $D \geq 0.6 \times T1$, and more preferably equal or larger than 80 % of T1, i.e. $D \geq 0.8 \times T1$.

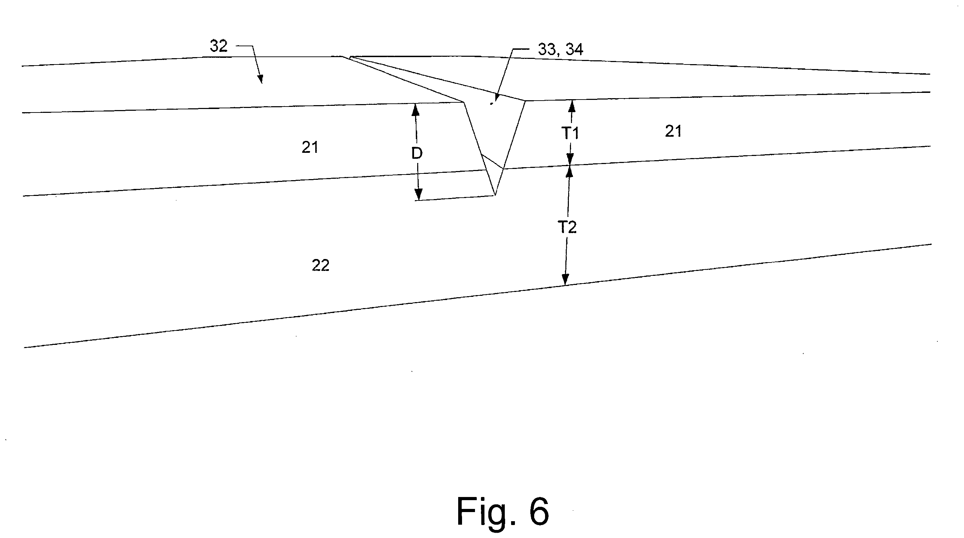

Similarly to Fig. 5, Fig. 6 shows incisions 33 and 34 with depth D in the upper surface 32 of a multipack thermoformed from a film according to the present invention, wherein said film comprises a first layer 21 and a second layer 22, corresponding to layer 1 and, respectively layer 2 of Fig. 1. Layer 21 and 22 have thickness T1 and, respectively T2. Incisions 33 and 34 extend through the first layer 21 into the second layer 22, preferably down to a depth D which corresponds to less or equal to 50 % of thickness T2 of second layer 22, i.e. $D \leq T1 + 0.5 \times T2$.

With reference to Fig. 5 and 6, the depth D of incisions 33 and 34 is preferably bounded according to the following relation

$$0.6 \times T1 \leq D \leq T1 + 0.5 \times T2$$

and more preferably, according to the relation

$$0.8 \times T1 \leq D \leq T1 + 0.5 \times T2$$

Similarly to Fig. 5 and 6, Fig. 7 and 8 show incisions 33 and 34 with depth D in the upper surface 32 of a multipack thermoformed from a film according to the present invention, wherein said film comprises a first layer 21, a second layer 22 and a third layer 23, corresponding to layer 1, respectively layer 2 and, respectively layer 3 of Fig. 2 and 3. Layer 21, 22 and 23 have thickness T1, respectively T2 and, respectively T3.

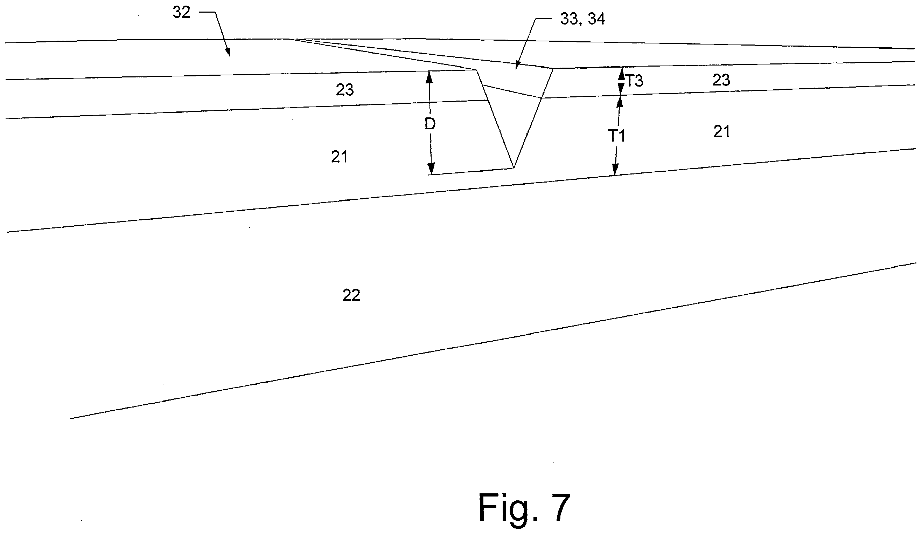

Fig. 7 shows incissions 33 and 34 extending through the third layer 23 into the first layer 21, preferably down to a depth D which corresponds to at least 60 % of thickness T1 of first layer 21, i.e. D≥T3 + 0.6×T1, and more preferably at least 80 % of thickness T1, i.e. D≥T3 + 0.8 × T1 .

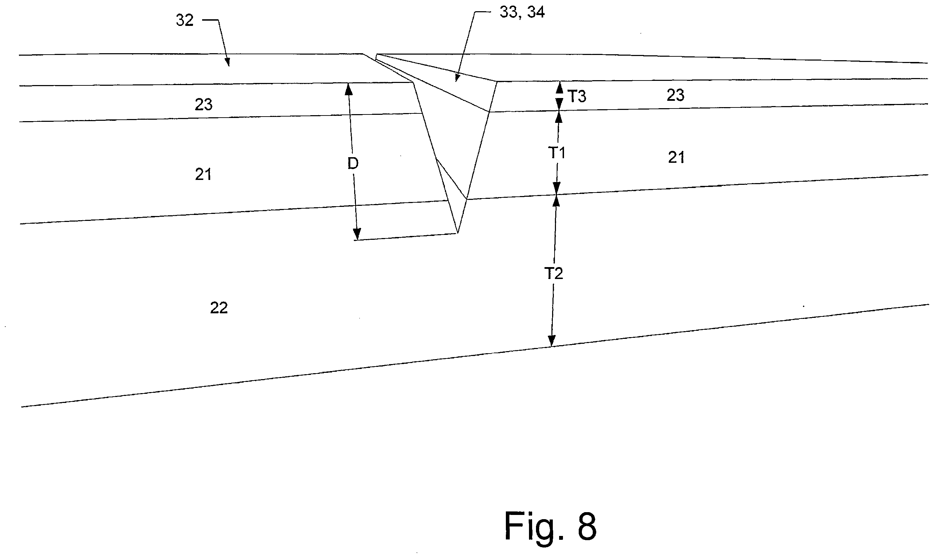

Fig. 8 shows incissions 33 and 34 extending through the third and first layer 23 and 21 into the second layer 22, preferably down to a depth D which is less or equal to 50 % of thickness T2 of second layer 22, i.e. D ≤ T3 + T1 + 0.5 × T2.

With reference to Fig. 7 and 8, the depth D of incisions 33 and 34 is preferably bounded according to the following relation

$$T3 + 0.6 \times T1 \leq D \leq T3 + T1 + 0.5 \times T2$$

and more preferably, according to the relation

$$T3 + 0.8 \times T1 \leq D \leq T3 + T1 + 0.5 \times T2$$

Despite not being shown in Fig. 4, 5, 6, 7 and 8, the multipack 30 of the present invention may also comprise a lid film sealed onto contiguous planar strips of the multipack 30 extending between adjacent container rows and columns. Preferably, said lid film consists of a sealable single-layer or multilayer polymer film equipped with a metal coating and one or more print layers. Regardless of whether or not the inventive multipack 30 comprises a lid film, the above stated bounds for the depth D of snap incisions 33, 34 with respect to the upper surface 32 of multipack 30, formed by the first layer 21 or third layer 23 of the inventive multilayer polymer film, are implemented.

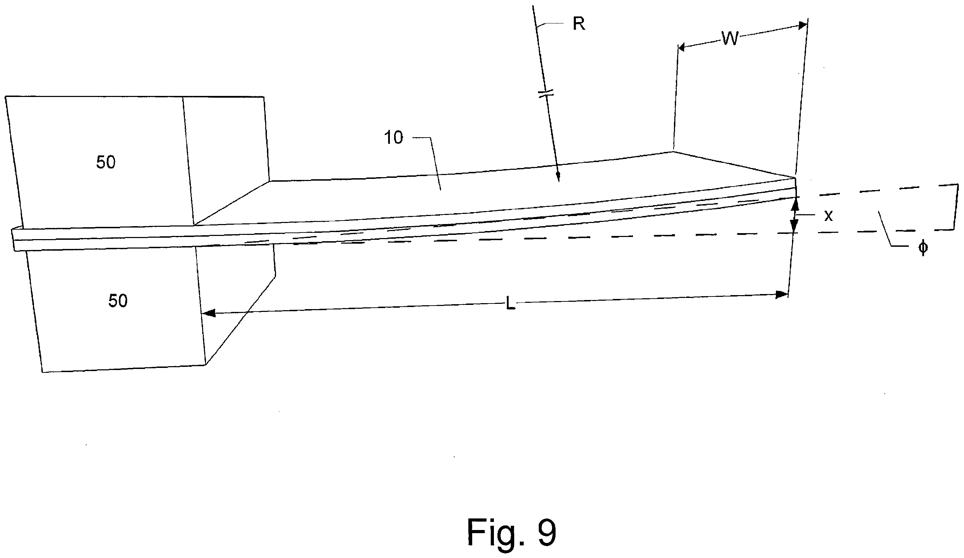

Fig. 9 shows a perspective schematic of the geometry for measurement of bending stiffness according to DIN 53350. A film sample 10 having width W is fixated at one end by a clamp 50. At distance L from clamp 50 the free standing end of film sample 10 is deflected in a direction perpendicular to the nominal film sample plane defined by clamp 50. In the present invention distance L is also designated as bending length L.

The perpendicular deflection is designated by reference sign "x" and the corresponding deflection angle by "$\phi$", wherein $\phi = \tan^{-1}(x/L)$. The deflection of film 10 is effected by an electronic actuator (not shown in Fig. 9) equipped with a load cell and a position transducer for measuring the bending force and corresponding deflection x. The bending stiffness S is defined as the ratio of bending moment M to curvature $\kappa$, i.e. S = M / $\kappa$ , wherein curvature $\kappa$ is the inverse of the bending radius R, i.e. $\kappa$ = 1/R. For small angular deflection $\phi \leq 7$ degree (i.e. $\phi \leq 0.122$ radian) the bending stiffness S can be approximated according to the formula S = $F \cdot L^3$ / (3·x) , wherein F designates the bending force.

In the present invention the bending stiffness is preferably measured using an automated instrument, such as 2-Point Bending Tester from Zwick Roell.

In the invention the bending stiffness S is stated in physical units of [N·mm$^2$ per 1 mm film width]. The physical bending stiffness of a film having a width of W in units of [mm] is then given by W × S . In scientific and technical literature, it is also common to state bending stiffness S in width normalized units of [N·mm]. The physical bending stiffness of a film having a width normalized bending stiffness S and a width of W in units of [mm], is then calculated as W × mm × Ŝ. Aside from differing units the numerical values of physical bending stiffness S [N·mm$^2$ per 1 mm film width] and width normalized bending stiffness S [N·mm] are identical.

INVENTIVE EXAMPLE

A four-layer polymer film according to the present invention of type C/A/B/C was prepared using three extruders and a feedblock/die designed for overlay of four melt streams. The thickness and material composition of the four layers are listed beneath.

| Table 1: Composition of inventive example film | | |
|---|---|---|
| Layer no. / type | Layer thickness† | Layer material |
| 3 / C | 20 $\mu$m | 96.5 wt-% APET RAMAPET†† N180 / 0.5 wt-% antiblock agent (wax + SiO$_2$ Sukano T dc S479) / 3 wt-% masterbatch color (PET + white pigment) |
| 1 / A | 265 $\mu$m | 97.5 wt-% BPET‡ / 2 wt-% masterbatch white (25 wt-% LDPE + 75 wt-% TiO$_2$) / 0.5 wt-% foaming agent (NaHCO$_3$ + citric acid + nucleating agent) |
| 2 / B | 395 $\mu$m | 68 wt-% BPET‡ / 30 wt-% masterbatch chalk (20 wt-% PPH + 80 wt-% CaCO$_3$ particle size < 5 $\mu$m) / 2 wt-% masterbatch white (25 wt-% LDPE + 75 wt-% TiO$_2$) |

(continued)

| Table 1: Composition of inventive example film | | |
|---|---|---|
| Layer no. / type | Layer thickness† | Layer material |
| 4 / C | 20 $\mu$m | 96.5 wt-% APET RAMAPET†† N180 / 0.5 wt-% antiblock agent (wax + $SiO_2$ Sukano T dc S479) / 3 wt-% masterbatch color (PET + white pigment) |
| † nominal layer thickness based on amount and density of the respective layer material; †† RAMAPET N180 having intrinsic viscosity of 0.8 dl/g ; ‡ BPET consisting of 85 wt-% PET (50 wt-% post consume recycled PET + 50 wt-% APET RAMAPET N180), 13 wt-% LDPE with melt flow rate of 3 to 8 g/min and 2 wt-% ethylene vinyl acetate. | | |

The thickness, density, bending stiffness, oxygen permeability (OTR) and water vapor permeability (WVTR) of the thus obtained four-layer polymer film were measured according to the methods recited in Table 4 and following results obtained:

Table 2: Inventive example film properties

| | |
|---|---|
| thickness | 695 $\mu$m |
| density | 1.28 g·cm$^{-3}$ |
| bending stiffness | 104.7 N·mm$^2$ per 1 mm width |
| oxygen permeability | 7.4 cm$^3$ / (m$^2$·day·atm) |
| water vapor permeability | 1.61 g / (m$^2$·day) |

COMPARATIVE EXAMPLE

A commercially available white polystyrene film for thermoforming of multipacks was tested using the same measurement methods and conditions as in the inventive example. For thickness, density, oxygen permeability and water vapor permeability of the white polystyrene film the following results were obtained:

Table 3: Comparative example film properties

| | |
|---|---|
| thickness | 840 $\mu$m |
| density | 1.09 g·cm$^{-3}$ |
| bending stiffness | 141.7 N·mm$^2$ per 1 mm width |
| oxygen permeability | 220.0 cm$^3$ / (m$^2$·day·atm) |
| water vapor permeability | 3.80 g / (m$^2$·day) |

The bending stiffness S of a film consisting of a homogeneous material is proportional to the elastic modulus E multiplied by the third power of the film thickness t, i.e. $S \sim E \cdot t^3$. In order to compare the bending stiffness of the inventive and comparative example films on a thickness, respectively material adjusted basis the bending stiffness of the comparative example film is multiplied by a factor of (695 $\mu$m / 840 $\mu$m)$^3$ = 0.57. Accordingly, for the thickness adjusted bending stiffness of the comparative example film a value of $0.57 \times 141.7$ N·mm$^2$ = 80,26 N·mm$^2$ per 1 mm film width is obtained. Thus, the thickness/material adjusted bending stiffness of the inventive film example is 30 % larger than that of the comparative polystyrene film.

Similarly, in order to compare the oxygen permeability (OTR) and the water vapor permeability (WVTR) of the inventive and comparative film examples on a thickness/material adjusted basis, the respective values of the comparative film example are multiplied by a factor of 840 $\mu$m / 695 $\mu$m = 1.21 . Accordingly, for the comparative polystyrene film thickness/material adjusted values of 265.9 cm$^3$ / (m$^2$·day·atm) for OTR and 4.59 g / (m$^2$·day) for WVTR are obtained. These values are larger by factors of 35.9 and, respectively 2.9 than the OTR and WVTR of the inventive film example.

The above results show that the inventive film has favorable properties compared to conventional polystyrene film.

MEASUREMENT METHODS

The physical properties of the inventive film and additives are measured according to the following methods:

| Table 4: Measurement methods | |
| --- | --- |
| **Film property** | **Method** |
| Total film thickness | DIN 53370:2006 |
| Layer thickness | Optical and electron microscope imaging of film section |
| Density | DIN EN ISO 1183:2005 |
| Elastic modulus / Tensile modulus | DIN EN ISO 527:2012 |
| Bending stiffness | DIN 53350<br>at a bending length of 100 mm using a film sample with 160 mm length, 30 mm width. |
| Oxygen permeability / Oxygen transmission rate (OTR) | DIN 53380-3:1998<br>at 23 °C and < 0.1 % relative humidity. |
| Water vapor permeability / Water vapor transmission rate (WVTR) | DIN EN ISO 15106-2:2005<br>at 38 °C and 90 % relative humidity. |
| Powder particle size, equivalent diameter | Electron microsope imaging of more than 1000 particles in combination with software based image analysis;<br>Light scattering using Horiba LA-300 laser diffraction particle size distribution analyzer for particle sizes from 0.01 to 5000 $\mu$m. |
| Intrinsic viscosity | DIN EN ISO 1628-5:1998 |
| Melt flow rate | DIN EN ISO 1133.2012<br>at 190 °C using a load of 2.16 kg and a standard nozzle having diameter of 2.095 mm and length of 8 mm. |

In Table 4 and throughout the present invention the term "equivalent diameter" designates the diameter of an "equivalent" spherical particle having the same chemical composition and areal section (electron microscope imaging) or scattering intensity (laser diffraction) as the examined particle. In practice the areal section or scattering intensity of each examined (irregularly shaped) particle is assigned to a spherical particle having a diameter commensurate with the measured signal.

In order to obtain representative values for the density and elastic modulus (tensile modulus) of individual layers of the inventive multilayer film, in particular the first and second layer, homogeneous films i.e. single layer films were prepared from the polymer compound of the respective layer using the same machine settings, such as extruder torque, extruder slit width, extruder slit height and temperature profile as those used for the manufacture of the inventive multilayer film. The density and tensile modulus (elastic modulus) of a single layer film prepared in such manner are then measured according to DIN EN ISO 1183:2005 and, respectively DIN EN ISO 527:2012 and assigned to the layer of an inventive multilayer film prepared from the same compound under the same process conditions.

## Claims

1.  A multilayer polymer film with 3 to 10 layers, **characterized in that**

    - a first layer consists of 80 to 99.5 % by weight of polyester and 0.5 to 20 % by weight of additives, based on the total weight of the first layer and comprises pores;
    - a second layer is bonded to a first surface of the first layer and consists of 50 to 90 % by weight of polyester and 10 to 50 % by weight of additives comprising 1 to 30 % by weight of a first additive selected from chalc, talc, mica, wollastonite, calcium carbonate, bentonite, kaolin, clay, titanium oxide and mixtures thereof, based on the total weight of the second layer;
    - the polyester of the first and second layer independently from each other are selected from polyethylene terephthalate and polyesters which consist of (i) 80 to 100 mol-% of a diacid residue component selected from terephthalic acid, naphthalene dicarboxylic acid, 1,4-cyclohexanedicarboxylic acid, isophthalic acid and mixtures thereof and (ii) 80 to 100 mol-% of a diol residue component selected from diols containing 2 to 10 carbon atoms, in particular ethylene glycol, and mixtures thereof and 0 to 20 mol-% of a modifying diol selected from 1,3-propanediol, 1,4-butanediol, 1,5-pentanediol, 1,6-hexanediol, 1,8-octanediol, 1,4-cyclohexanedimethanol, 2,2,4-trimethyl-1,3-pentanediol, propylene glycol, 2,2,4,4-tetramethyl-1,3-cyclobutanediol, based on 100 mol-% diacid residues and, respectively 100 mol-% diol residues;
- the multilayer polymer film comprises a third layer bonded to a second surface of the first layer opposite to the second layer, the third layer consisting of 90 to 99.5 % by weight of polyester and 0.5 to 10 % by weight of additives, based on the total weight of the third layer and the third layer does not comprise a foaming agent and anorganic particles.

2. The multilayer polymer film according to claim 1, **characterized in that** the multilayer polymer film has a thickness of 400 to 1200 $\mu$m.

3. The multilayer polymer film according to claim 1 or 2, **characterized in that** the multilayer polymer film has a density of 1 to 1.4 g/cm$^3$.

4. The multilayer polymer film according to any one of claims 1 to 3, **characterized in that** the multilayer polymer film has a bending stiffness of 146·t$^3$ to 350·t$^3$ N/mm per 1 mm film width, wherein t is the thickness of the multilayer polymer film in units of mm and the bending stiffness is measured according to DIN 53350.

5. The multilayer polymer film according to any one of claims 1 to 4, **characterized in that** the ratio of thickness T1 of the first layer to thickness T2 of the second layer is in the range from 0.5 to 4, i.e. $0.5 \leq$ T1 / T2 $\leq 4$ .

6. The multilayer polymer film according to any one of claims 1 to 5, **characterized in that** the first and second layer independently from each other comprise 8 to 24 % by weight of polyethylene and 0.1 to 2 % by weight of ethylene vinyl acetate, based on the total weight of the first and, respectively the second layer.

7. The multilayer polymer film according to any one of claims 1 to 6, **characterized in that** the first layer comprises 0.01 to 1 % by weight of a foaming agent, based on the total weight of the first layer.

8. The multilayer polymer film according to claim 7, **characterized in that** the foaming agent is selected from carbon dioxide, sodium hydrogen carbonate and citric acid, nitrogen, azodicarbonamide, oxy-bis-benzene sulfonylhydrazide, toluene sulfonylhydrazide, benzene sulfonylhydrazide, toluene sulfonylsemicarbazide, 5-phenyltetrazole, di-nitroso pentamethylene tetramine and mixtures thereof.

9. The multilayer polymer film according to any one of claims 1 to 8, **characterized in that** the multilayer polymer film comprises a fourth layer bonded to a surface of the second layer opposite to the first layer, the fourth layer comprising 90 to 99.5 % by weight of polyester and 0.5 to 10 % by weight of additives, based on the total weight of the fourth layer.

10. The multilayer polymer film according to claim 8 or 9, **characterized in that** the third layer has a thickness of 4 to 60 $\mu$m.

11. The multilayer polymer film according to any one of claims 8 to 10, **characterized in that** the fourth layer has a thickness of 4 to 60 $\mu$m.

12. A multipack comprising 2 to 40 containers, **characterized in that** the multipack is thermoformed from the multilayer polymer film according to any one of claims 1 to 11 and the first layer or the third layer of the multilayer polymer film constitute an upper surface of the multipack having concave portions.

13. The multipack according to claim 12, **characterized in that** the multipack comprises 1 to 40 snap incisions extending from the upper surface of the multipack into the multilayer polymer film to a depth D, wherein D1 $\leq$ D $\leq$ D2, D1 extends to 80 % of the thickness of the first layer and D2 extends to 50 % of the thickness of the second layer.

**Patentansprüche**

1. Mehrschichtige Polymerfolie mit 3 bis 10 Schichten, **dadurch gekennzeichnet, dass**

- eine erste Schicht zu 80 bis 99,5 Gewichts-% aus Polyester und zu 0,5 bis 20 Gewichts-% aus Additiven, bezogen auf das Gesamtgewicht der ersten Schicht, besteht und Poren umfasst;

- eine zweite Schicht mit einer ersten Oberfläche der ersten Schicht verklebt ist und zu 50 bis 90 Gewichts-% aus Polyester und zu 10 bis 50 Gewichts-% aus Additiven, die 1 bis 30 Gewichts-%, bezogen auf das Gesamtgewicht der zweiten Schicht, eines aus Kalk, Talk, Glimmer, Wollastonit, Calciumcarbonat, Bentonit, Kaolin, Ton, Titanoxid und Mischungen davon ausgewählten ersten Additivs umfassen, besteht;

- die Polyester der ersten und zweiten Schicht unabhängig voneinander aus Polyethylenterephthalat und Polyestern ausgewählt sind, die zu (i) 80 bis 100 mol-% aus einer Disäurerestkomponente, die aus Terephthalsäure, Naphthalindicarbonsäure, 1,4-Cyclohexandicarbonsäure, Isophthalsäure und Mischungen davon ausgewählt ist, und zu (ii) 80 bis 100 mol-% aus einer Diolrestkomponente, die aus 2 bis 10 Kohlenstoffatome enthaltenden Diolen, insbesondere Ethylenglykol, und Mischungen davon ausgewählt ist, und zu 0 bis 20 mol-% aus einem Modifizierungsdiol, das aus 1,3-Propandiol, 1,4-Butandiol, 1,5-Pentandiol, 1,6-Hexandiol, 1,8-Octandiol, 1,4-Cyclohexandimethanol, 2,2,4-Trimethyl-1,3-pentandiol, Propylenglykol, 2,2,4,4-Tetramethyl-1,3-cyclobutandiol ausgewählt ist, bezogen auf 100 mol-% Disäurereste bzw. 100 mol-% Diolreste, bestehen;

- die mehrschichtige Polymerfolie eine dritte Schicht umfasst, die, entgegengesetzt zur zweiten Schicht, mit einer zweiten Oberfläche der ersten Schicht verklebt ist, wobei die dritte Schicht, bezogen auf das Gesamtgewicht der dritten Schicht, zu 90 bis 99,5 Gewichts-% aus Polyester und zu 0,5 bis 10 Gewichts-% aus Additiven besteht und die dritte Schicht kein Schäumungsmittel und keine anorganischen Teilchen umfasst.

2. Mehrschichtige Polymerfolie nach Anspruch 1, **dadurch gekennzeichnet, dass** die mehrschichtige Polymerfolie eine Dicke von 400 bis 1200 $\mu$m aufweist.

3. Mehrschichtige Polymerfolie nach Anspruch 1 oder 2, **dadurch gekennzeichnet, dass** die mehrschichtige Polymerfolie eine Dichte von 1 bis 1,4 g/cm$^3$ aufweist.

4. Mehrschichtige Polymerfolie nach einem der Ansprüche 1 bis 3, **dadurch gekennzeichnet, dass** die mehrschichtige Polymerfolie eine Biegesteifigkeit von 146·t$^3$ bis 350·t$^3$ N/mm je 1 mm Folienbreite aufweist, wobei t für die Dicke der mehrschichtigen Polymerfolie in der Einheit mm steht und die Biegesteifigkeit gemäß DIN 53350 gemessen wird.

5. Mehrschichtige Polymerfolie nach einem der Ansprüche 1 bis 4, **dadurch gekennzeichnet, dass** das Verhältnis von Dicke T1 der ersten Schicht zu Dicke T2 der zweiten Schicht im Bereich von 0,5 bis 4, d.h. $0.5 \leq T1 / T2 \leq 4$, liegt.

6. Mehrschichtige Polymerfolie nach einem der Ansprüche 1 bis 5, **dadurch gekennzeichnet, dass** die erste und zweite Schicht unabhängig voneinander 8 bis 24 Gewichts-% Polyethylen und 0,1 bis 2 Gewichts-% Ethylenvinylacetat, bezogen auf das Gesamtgewicht der ersten bzw. der zweiten Schicht, umfassen.

7. Mehrschichtige Polymerfolie nach einem der Ansprüche 1 bis 6, **dadurch gekennzeichnet, dass** die erste Schicht 0,01 bis 1 Gewichts-%, bezogen auf das Gesamtgewicht der ersten Schicht, eines Schäumungsmittels umfasst.

8. Mehrschichtige Polymerfolie nach Anspruch 7, **dadurch gekennzeichnet, dass** das Schäumungsmittel aus Kohlendioxid, Natriumhydrogencarbonat und Citronensäure, Stickstoff, Azodicarbonamid, Oxybisbenzolsulfonylhydrazid, Toluolsulfonylhydrazid, Benzolsulfonylhydrazid, Toluolsulfonylsemicarbazid, 5-Phenyltetrazol, Di-Nitrosopentamethylentetramin und Mischungen davon ausgewählt ist.

9. Mehrschichtige Polymerfolie nach einem der Ansprüche 1 bis 8, **dadurch gekennzeichnet, dass** die mehrschichtige Polymerfolie eine vierte Schicht umfasst, die, entgegengesetzt zur ersten Schicht, mit einer Oberfläche der zweiten Schicht verklebt ist, wobei die vierte Schicht, bezogen auf das Gesamtgewicht der vierten Schicht, 90 bis 99,5 Gewichts-% Polyester und 0,5 bis 10 Gewichts-% Additive umfasst.

10. Mehrschichtige Polymerfolie nach Anspruch 8 oder 9, **dadurch gekennzeichnet, dass** die dritte Schicht eine Dicke von 4 bis 60 $\mu$m aufweist.

11. Mehrschichtige Polymerfolie nach einem der Ansprüche 8 bis 10, **dadurch gekennzeichnet, dass** die vierte Schicht eine Dicke von 4 bis 60 $\mu$m aufweist.

12. Mehrfachpackung, die 2 bis 40 Behälter umfasst, **dadurch gekennzeichnet, dass** die Mehrfachpackung aus der mehrschichtigen Polymerfolie nach einem der Ansprüche 1 bis 11 thermogeformt ist und die erste Schicht oder die dritte Schicht der mehrschichtigen Polymerfolie eine Oberseite der Mehrfachpackung mit konkaven Bereichen bildet.

**13.** Mehrfachpackung nach Anspruch 12, **dadurch gekennzeichnet, dass** die Mehrfachpackung 1 bis 40 Abreißkerben umfasst, die sich von der Oberseite der Mehrfachpackung in die mehrschichtige Polymerfolie bis zu einer Tiefe D erstrecken, wobei D1 ≤ D ≤ D2, D1 sich bis 80 % der Dicke der ersten Schicht erstreckt und D2 sich bis 50 % der Dicke der zweiten Schicht erstreckt.

**Revendications**

**1.** Film polymère multicouche avec 3 à 10 couches, **caractérisé en ce que**

- une première couche est constituée de 80 à 99,5 % en poids de polyester et de 0,5 à 20 % en poids d'additifs, sur la base du poids total de la première couche et comprend des pores ;
- une deuxième couche est liée à une première surface de la première couche et consiste en 50 à 90 % en poids de polyester et 10 à 50 % en poids d'additifs comprenant 1 à 30 % en poids d'un premier additif choisi parmi le chalc, le talc, le mica, la wollastonite, le carbonate de calcium, la bentonite, le kaolin, l'argile, l'oxyde de titane et leurs mélanges, sur la base du poids total de la deuxième couche ;
- le polyester de la première et de la deuxième couche sont choisis indépendamment l'un de l'autre parmi le polyéthylène téréphtalate et les polyesters qui consistent en (i) 80 à 100 % en moles d'un composant de résidus de diacide choisi parmi l'acide téréphtalique, l'acide naphtalène dicarboxylique, l'acide 1,4-cyclohexanedicarboxylique, l'acide isophtalique et leurs mélanges et (ii) 80 à 100 % en moles d'un composant résiduel diol choisi parmi les diols contenant 2 à 10 atomes de carbone, en particulier l'éthylène glycol, et leurs mélanges, et 0 à 20 % en moles d'un diol modificateur choisi parmi le 1,3-propanediol, le 1,4-butanediol, le 1,5-pentanediol, le 1,6-hexanediol, le 1,8-octanediol, le 1,4-cyclohexanediméthanol, le 2,2,4-triméthyl-1,3-pentanediol, le propylène glycol, le 2,2,4,4-tétraméthyl-1,3-cyclobutanediol, sur la base de 100 % en moles de résidus de diacides et, respectivement, de 100 % en moles de résidus de diols ;
- le film polymère multicouche comprend une troisième couche liée à une deuxième surface de la première couche opposée à la deuxième couche, la troisième couche étant constituée de 90 à 99,5 % en poids de polyester et de 0,5 à 10 % en poids d'additifs, sur la base du poids total de la troisième couche et la troisième couche ne comprend pas d'agent moussant et de particules inorganiques.

**2.** Film polymère multicouche selon la revendication 1, **caractérisé en ce que** le film polymère multicouche a une épaisseur de 400 à 1200 μm.

**3.** Film polymère multicouche selon la revendication 1 ou 2, **caractérisé en ce que** le film polymère multicouche a une densité de 1 à 1,4 g/cm$^3$.

**4.** Film polymère multicouche selon l'une quelconque des revendications 1 à 3, **caractérisé en ce que** le film polymère multicouche a une rigidité à la flexion de 146.t$^3$ à 350.t$^3$ N/mm par 1 mm de largeur de film, dans lequel t est l'épaisseur du film polymère multicouche en unités de mm et la rigidité à la flexion est mesurée selon la norme DIN 53350.

**5.** Film polymère multicouche selon l'une quelconque des revendications 1 à 4, **caractérisé en ce que** le rapport entre l'épaisseur T1 de la première couche et l'épaisseur T2 de la deuxième couche est compris entre 0,5 et 4, c'est-à-dire 0,5. ≤ T1 / T2 ≤ 4.

**6.** Film polymère multicouche selon l'une quelconque des revendications 1 à 5, **caractérisé en ce que** la première et la deuxième couche comprennent, indépendamment l'une de l'autre, 8 à 24 % en poids de polyéthylène et 0,1 à 2 % en poids d'éthylène-acétate de vinyle, sur la base du poids total de la première et, respectivement, de la deuxième couche.

**7.** Film polymère multicouche selon l'une quelconque des revendications 1 à 6, **caractérisé en ce que** la première couche comprend 0,01 à 1 % en poids d'un agent moussant, sur la base du poids total de la première couche.

**8.** Film polymère multicouche selon la revendication 7, **caractérisé en ce que** l'agent moussant est choisi parmi le dioxyde de carbone, l'hydrogénocarbonate de sodium et l'acide citrique, l'azote, l'azodicarbonamide, l'oxy-bis-benzène sulfonylhydrazide, le toluène sulfonylhydrazide, le benzène sulfonylhydrazide, le toluène sulfonylsemicarbazide, le 5-phényltétrazole, la di-nitroso pentaméthylène tétramine et leurs mélanges.

**9.** Film polymère multicouche selon l'une quelconque des revendications 1 à 8, **caractérisé en ce que** le film polymère multicouche comprend une quatrième couche liée à une surface de la deuxième couche opposée à la première couche, la quatrième couche comprenant 90 à 99,5 % en poids de polyester et 0,5 à 10 % en poids d'additifs, sur la base du poids total de la quatrième couche.

**10.** Film polymère multicouche selon la revendication 8 ou 9, **caractérisé en ce que** la troisième couche a une épaisseur de 4 à 60 $\mu$m.

**11.** Film polymère multicouche selon l'une quelconque des revendications 8 à 10, **caractérisé en ce que** la quatrième couche a une épaisseur de 4 à 60 $\mu$m.

**12.** Emballage multiple comprenant 2 à 40 récipients, **caractérisé en ce que** l'emballage multiple est thermoformé à partir du film polymère multicouche selon l'une quelconque des revendications 1 à 11 et la première couche ou la troisième couche du film polymère multicouche constitue une surface supérieure de l'emballage multiple ayant des parties concaves.

**13.** Emballage multiple selon la revendication 12, **caractérisé en ce que** l'emballage multiple comprend 1 à 40 incisions frangibles s'étendant depuis la surface supérieure de l'emballage multiple dans le film polymère multicouche jusqu'à une profondeur D, où D1 $\leq$ D $\leq$ D2, D1 s'étend jusqu'à 80 % de l'épaisseur de la première couche et D2 s'étend jusqu'à 50 % de l'épaisseur de la deuxième couche.

Fig. 1

Fig. 2

Fig. 3

Fig. 4

Fig. 5

Fig. 6

Fig. 7

Fig. 8

EP 3 319 797 B1

Fig. 9

EP 3 319 797 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014067923 A1

**Non-patent literature cited in the description**

- **J.R. WITHEY.** Quantitative Analysis of Styrene Monomer in Polystyrene and Foods Including Some Preliminary Studies of the Uptake and Pharmacodynamics of the Monomer in Rats. *Environmental Health Perspectives,* 1976, vol. 17, 125-133